(19) Europäisches Patentamt
European Patent Office
Office européen des brevets

(11) Numéro de publication : **0 010 051**
**B1**

# (12) FASCICULE DE BREVET EUROPÉEN

(45) Date de publication du fascicule du brevet : **03.02.82**

(51) Int. Cl.$^3$ : **C 08 G 63/18**, C 08 G 63/68, C 08 G 63/66

(21) Numéro de dépôt : **79420044.4**

(22) Date de dépôt : **24.09.79**

(54) **Copolyesters thermotropes issus d'au moins une hydroquinone substituée, d'un diacide aromatique et/ou cycloaliphatique et d'un diacide aliphatique.**

(30) Priorité : **05.10.78 FR 7828947**

(43) Date de publication de la demande : **16.04.80 (Bulletin 80/08)**

(45) Mention de la délivrance du brevet : **03.02.82 Bulletin 82/05**

(84) Etats contractants désignés : **BE CH DE GB IT LU NL SE**

(56) Documents cités :
**FR - A - 1 547 346**
**FR - A - 2 270 074**
**FR - A - 2 270 282**
**GB - A - 993 272**

**CHEMICAL ABSTRACTS, Vol. 87, n° 18, 31 octobre 1977, page 32, abrégé 136803t, Colombus, Ohio, US.**

(73) Titulaire : **RHONE-POULENC INDUSTRIES**
**Brevets Pharma 25 Quai Paul Doumer**
**F-92408 Courbevoie Cedex (FR)**

(72) Inventeur : **Fayolle, Bernard**
**8, rue Fayolle**
**F-69130 Ecully (FR)**

(74) Mandataire : **Trolliet, Maurice et al**
**RHONE-POULENC INDUSTRIES Centre de Recherches des Carrières Service Brevets**
**F-69190 Saint-Fons (FR)**

**EP 0 010 051 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

Copolyesters thermotropes issus d'au moins une hydroquinone substituée, d'un diacide aromatique et/ou cycloaliphatique et d'un diacide aliphatique.

La présente invention concerne des copolyesters alcoylaromatiques thermotropes de masse moléculaire élevée.

Il est déjà connu, selon le brevet français 1 547 346, de préparer des polyesters de haute stabilité thermique à partir de diphénols halogénés et de chlorure d'acides dicarboxyliques aliphatiques, cycloaliphatiques et/ou aromatiques, lesdits polyesters étant utilisables comme laques, revêtements, matière d'isolation et matières à mouler.

Mais les polymères préparés dans les exemples de ce brevet sont tous issus de dérivés halogénés du bis (p-hydroxyphényl)-2,2 propane et ne sont pas capables de donner des masses fondues anisotropes.

Il est également connu, selon la demande française 2 270 282 de préparer des polyesters issus d'un ou plusieurs diphénols et d'un ou plusieurs diacides aromatiques et/ou cycloaliphatiques, capables de former une masse fondue anisotrope à partir de laquelle des filaments orientés peuvent être formés par filage à l'état fondu.

Toutefois cette famille de polyesters est limitée : pour atteindre un point de fusion avantageux sans perdre la rigidité caractéristique de ces polyesters cycliques et nécessaire pour l'anisotropie, il est avantageux de les modifier ; une des modifications envisagées consiste à introduire une flexibilité limitée entre les noyaux, par exemple par des liaisons éther et/ou des chaînes aliphatiques de longueur limitée.

Quelques exemples de ces chaînes sont donnés dans les demandes françaises n$^{os}$ 2 270 282 et 2 270 074 :

— dans la demande française n° 2 270 282 un seul exemple de composé comportant une chaîne aliphatique est fourni : il s'agit du p,p'-dicarboxydiphénoxy-1,2-éthane dont les noyaux aromatiques sont reliés par une chaîne de 4 atomes ($-OCH_2-CH_2-O-$) et dont l'utilisation est limitée aux terpolymères et tétrapolymères. Toutefois, d'après KAMIDE, MIYAZAKI et KOBAYACHI (Polymer J. 1977 9 (3) 317-27), ce diacide semble en réalité plus rigide que l'acide téréphtalique auquel il est comparé sous forme d'homopolyester avec l'éthylène-glycol ;

— dans la demande française n° 2 270 074, les chaînes acycliques introduites dans le même type de polyester peuvent avoir des chaînes encore plus courtes comportant 2 et 3 atomes ($-O-CH_2-$ et $-O-CH_2-O-$) ; la longueur limitée des chaînes acycliques peut s'expliquer par le fait que les polyesters de diphénols et de diacides aliphatiques ne donnent pas des masses fondues anisotropes.

Il a maintenant été trouvé qu'il était possible de diminuer la rigidité des polyesters cycliques tout en leur conservant leurs caractéristiques d'anisotropie à la fusion, et ceci sans abaisser trop fortement le point de fusion desdits copolyesters, par introduction d'une flexibilité relativement importante dans les chaînes moléculaiires au moyen de chaînes acycliques comportant au moins 7 atomes.

La présente invention concerne des copolyesters thermotropes conformables de haute masse moléculaire, caractérisés par le fait qu'ils possèdent une viscosité inhérente d'au moins 0,5 (mesurée sur une solution à 0,5 g/100 cm$^3$ dans un mélange solvant p-chlorophénol/dichloro-1,2 éthane à 50/50 en volume), ayant une température d'écoulement comprise entre 150° et 330 °C constitués d'unités de formule :

$$(-O-X_1-O-)_a, (-O-X_2-O)_b, (-O-X_3-O-)_c$$

$$-CO-Y-CO-$$

$$-CO-Z-CO-$$

dans lesquels

$X_1$ représente un radical paraphénylène monosubstitué par un groupe méthyle, éthyle ou un atome de chlore ou brome,

$X_2$ un radical phénylène-1,4 non substitué,

$X_3$ représente un radical paraphénylène-1,4 disubstitué par deux groupes méthyle, éthyle ou 2 atomes de chlore ou brome, ou un radical diphénylène-4,4' ou p-p'-diphénylène éther dans lequel chaque noyau aromatique peut être substitué par un groupe méthyle, éthyle ou un atome de chlore ou brome,

avec $0{,}4 \leq a \leq 1$

$0 \leq b \leq 0{,}6$

$0 \leq c \leq 0{,}1$

et $a + b + c = 1$

Y représente :

— un radical phénylène-1,4, cyclohexylène-1,4

— ou un radical comportant deux groupes phénylène-1,4 pouvant être reliés entre eux par une liaison simple ou une chaîne acyclique pouvant comporter jusqu'à 8 atomes de carbone et éventuellement un ou deux hétéroatomes (notamment d'oxygène). Comme exemple de chaînes acycliques on peut citer des radicaux alcoylènes tels que méthylène, éthylène, propylène-1,3, butylène-1,4, octylène-1,8

éventuellement liés aux groupes phénylènes par l'intermédiaire d'hétéroatomes tels que l'oxygène,

— ou un radical aromatique divalent comportant au moins deux noyaux phényles condensés, dans lequel les liaisons rattachées aux groupes carbonyles sont opposées et parallèles tels que les groupes naphtylène-2,6, naphtylène-1,5 et naphtylène-1,4.

Z représente un radical $-(CH_2)_n-$ avec $3 \leq n \leq 10$,

le rapport molaire Z/Y + Z étant compris entre 20 et 50 %.

Les unités de formule $-O-X_1-O-$ sont issues de dérivés monosubstitués de l'hydroquinone utilisés seuls ou en mélange entre eux. Les dérivés monosubstitués de l'hydroquinone peuvent également être utilisés en mélange avec jusqu'à 60 % en moles d'hydroquinone par rapport à la quantité totale de diphénols ou avec jusqu'à 10 % en moles d'un diphénol pris dans le groupe formé par

a) les dérivés disubstitués de l'hydroquinone comportant des groupes méthyle, éthyle et/ou des atomes de chlore et/ou de brome ;

b) le dihydroxy-4,4' biphényle comportant éventuellement un groupe méthyle, éthyle ou un atome de chlore ou de brome par noyau aromatique ;

c) le dihydroxy-4,4' diphényléther comportant éventuellement un radical méthyle, éthyle ou un atome de chlore ou de brome par noyau aromatique.

Comme exemples spécifiques de diphénols donnant naissance aux motifs de formule $(-O-X_1-O-)$ on peut citer le dihydroxy-3,6 toluène, le dihydroxy-3,6 éthylbenzène, le dihydroxy-3,6 chlorobenzène. Parmi les diphénols susceptibles d'engendrer les motifs de formule $(-O-X_3-O-)$ on peut nommer à titre illustratif : le dihydroxy-3,6 dichloro-1,2 benzène ; le dihydroxy-3,6 dichloro-1,4 benzène, le dihydroxy-3,6 orthoxylène, le dihydroxy-3,4 paraxylène, le dihydroxy-2,5 chloro-3 toluène, le dihydroxy-4,4' biphényle, le méthyl-2 dihydroxy-4,4' diphényle, le méthyl-3 dihydroxy-4,4' diphényle, le diméthyl-2,2' dihydroxy-4,4' biphényle, le chloro-2 dihydroxy-4,4' biphényle, le dichloro-2,2' dihydroxy-4,4' biphényle, le méthyl-2 chloro-3' dihydroxybiphényle, l'oxyde de bis(méthyl-2 hydroxy-4 phényle), l'oxyde d'hydroxy-1 méthyl-3 phényle et d'hydroxy-4 phényle, l'oxyde de chloro-2 hydroxy-4 phényle et de méthyl-3 hydroxy-4 phényle, l'oxyde de bis(hydroxy-4 phényle).

Pour la préparation des copolyesters thermotropes selon l'invention, les diphénols précités peuvent être mis en œuvre soit sous forme de phénols libres, soit sous forme de dérivés de la fonction phénol susceptibles de réagir avec les diacides carboxyliques ou leurs dérivés (dihalogénures par exemple). Comme exemples de tels dérivés de phénols, on peut citer leurs diesters d'acides alcanoïques inférieurs (acétate, propionate, butyrate).

On utilise de manière préférentielle les méthyl- ou les chlorohydroquinones, seules ou en mélange avec l'hydroquinone non substituée ou leurs dérivés.

Les unités $-CO-Y-CO-$ proviennent de diacides carboxyliques aromatiques et/ou cycloaliphatiques ou leurs dérivés qui peuvent être utilisés soit seuls, soit en mélange entre eux.

Les diacides aromatiques préférés sont l'acide téréphtalique, le dicarboxy-4,4' diphényle, le p,p'-dicarboxydiphénoxy-1,2 éthane, le p,p'-dicarboxydiphénoxy-1,4 butane, le p,p'-dicarboxydiphénoxy-1,6 hexane, le dicarboxy-2,6 naphtalène. L'acide cycloaliphatique préféré est l'acide trans-hexahydrotéréphtalique. On peut également utiliser leurs dérivés tels que leurs esters inférieurs ou leurs chlorures.

Parmi les diacides aliphatiques ou leurs dérivés dont sont issus les copolyesters selon la présente invention, on peut citer plus particulièrement les acides glutarique, sébacique et de préférence l'acide adipique. La proportion de ces diacides aliphatiques ou leurs dérivés est de 20 à 50 % en moles et de préférence 25 à 50 % par rapport à la quantité totale des diacides ou dérivés dont les polymères sont issus. De tels diacides permettent l'introduction de chaînes acycliques comportant 7 à 14 atomes de chaîne entre deux noyaux aromatiques et/ou cyclaniques.

Les copolyesters selon la présente invention possèdent une masse moléculaire élevée, une viscosité inhérente de préférence supérieure à 0,6 $dlg^{-1}$, et une température d'écoulement de préférence comprise entre 180 °C et 300 °C. On entend par température d'écoulement la température à laquelle les bords d'un échantillon sous forme de copeau de polymère ou fibre coupée commencent à s'arrondir. Cette température est déterminée par observation visuelle de l'échantillon sur une lamelle couvre-objet placée entre des polariseurs croisés, pour une vitesse de montée en température appropriée généralement de l'ordre de 20 °C/minute sur un microscope équipé d'une platine chauffante connu dans le commerce sous la marque « THERMOPAN », fabriqué par Reichert.

Les copolyesters selon la présente demande possèdent la caractéristique d'être thermotropes, c'est-à-dire qu'ils sont capables de donner des masses fondues anisotropes qui sont faciles à conformer par filage ou moulage ; la thermotropie est facile à mettre en évidence lorsqu'on observe le polymère à l'état fondu dans des systèmes optiques équipés de polariseurs croisés : il se produit une transmission de la lumière polarisée et création d'une forte biréfringence alors que la transmission de la lumière et la biréfringence sont nulles pour les produits isotropes observés en lumière polarisée. La mise en évidence de l'anisotropie des polyesters selon la présente invention a été effectuée par la méthode thermo-optique TOT décrite dans la demande française 2 270 282.

De ce fait, les masses fondues possèdent une orientation propre et un degré relativement élevé d'organisation qui se retrouvent sur les articles conformés tels que les fils, films, objets moulés, leur conférant déjà à l'état brut des propriétés améliorées telles que module, ténacité, qu'on n'observe pas habituellement sur les produits bruts isotropes.

Les objets moulés en particulier possèdent des caractéristiques intéressantes dans une direction, comparables à celles des matières plastiques renforcées par des fibres de verre.

Les polyesters thermotropes selon la présente invention peuvent être obtenus selon tout procédé connu, par exemple par réaction de dichlorures d'acide sur les diphénols par polycondensation interfaciale ou à haute température dans un milieu solvant à point d'ébullition élevé. Ils sont de préférence préparés selon un procédé d'acidolyse, c'est-à-dire par action de diacides sur un diester de diphénol et plus particulièrement par le procédé en deux phases faisant réagir d'abord le diacide aliphatique sur le diester de diphénol en excès à température inférieure à 250 °C jusqu'à un taux de transformation ⩾ 85 %, puis le diacide aromatique ou cycloaliphatique à température supérieure à 250 °C et polycondensation, tel que décrit dans la demande française déposée le même jour sous le numéro d'enregistrement national 78/28 948.

Les exemples qui suivent dans lesquels les parties s'entendent en poids sont donnés à titre indicatif mais non limitatif pour illustrer l'invention.

Dans ces exemples :

— la thermotropie a été mise en évidence de la manière indiquée ci-dessus,

— on entend par angle d'orientation la longueur d'arc en degrés mesurée à la moitié de l'intensité maximale de la tache principale équatoriale utilisée pour ladite mesure. Le choix de la tache a été effectué selon les indications du brevet français 2 134 582 ; la tache principale utilisée est celle qui correspond à la plus grande valeur de 2 θ. La mesure de la courbe de répartition des intensités de diffraction est obtenue par balayage azimutal de l'arc de diffraction choisi à l'aide d'un appareil spécialement conçu pour cet usage, le « Microdensitomètre Joyce et Loebl MK III C ».

L'angle d'orientation des fibres examinées est mesuré selon la description générale relatée dans « X-Ray Diffraction In Polymer Sciences » par Leroy E. Alexander, Wiley Interscience (1969) — chapitre 4 page 264,

— la viscosité inhérente a été mesurée sur une solution à 0,5 g de polymère pour 100 $cm^3$ d'un mélange solvant p-chlorophénol/dichloro-1,2 éthane 50/50 en volume.

## Exemple 1

Dans un réacteur à polycondensation agité et chauffé par un bain métallique, on introduit :

| | | |
|---|---|---|
| — diacétate de méthylhydroquinone | 375,6 | parties |
| — acide adipique (50 % en mole par rapport à l'ensemble des diacides) | 131,4 | parties |
| — acétate de magnésium | 0,328 | partie |

On purge l'appareil à l'argon et on chauffe les réactifs avec un bain métallique à 240 °C. La réaction d'acidolyse débute entre 210 et 220 °C et dure 1 heure sous pression atmosphérique alors que la température atteint 235 °C. La pression est alors diminuée à $532.10^2$ Pa en 5 minutes en évitant des entraînements de réactifs et on la maintient pendant 10 minutes. On recueille 92,6 % de l'acide acétique théoriquement formé.

On introduit alors 149,4 parties d'acide téréphtalique alors que la température du bain est montée à 290 °C. La deuxième réaction d'acidolyse débute sous pression atmosphérique alors que la température de la masse réactionnelle est de 270 °C. Au bout de 45 minutes la température de la masse réactionnelle atteint 290 °C et est maintenue pendant 1 h 30. On abaisse alors la pression à $6,65.10^2$ Pa par paliers puis à $1,6.10^2$ Pa et la maintient 22 minutes. La température étant maintenue à 290 °C, le polymère obtenu est coulé dans un bain d'eau. Le polymère obtenu est clair. Il a une température d'écoulement de 243 °C, une viscosité inhérente de 1,15 $dlg^{-1}$ et présente une anisotropie à température supérieure à 243 °C.

Le copolyester est séché pendant 6 heures à 150 °C avant d'être moulé par injection, en barreaux en forme d'haltères de 2 mm d'épaisseur à 275, 280 et 285 °C sous une pression de $29,4.10^4$ Pa et à une température moyenne du moule de 40 °C (sur presse KAP). Les caractéristiques mécaniques mesurées sur les barreaux sont les suivantes :

Propriétés en traction :

— contrainte de rupture 6,18 $daN/mm^2$

— allongement à la rupture 4,44 %

— module d'élasticité 187 $daN/mm^2$

(module sécant calculé à 50 % de la contrainte de rupture).

Propriétés en flexion selon la température de moulage :

| | Résistance en flexion en daN/mm2 | Module de flexion en daN/mm2 |
|---|---|---|
| 275 °C | 13 | 512 |
| 280 °C | 13,4 | 536 |
| 285 °C | 12,2 | 541 |

La résistance au choc Charpy avec entailles (norme ISO R 179) est déterminée sur des éprouvettes

moulées à 280 °C ± 3 °C. La résilience moyenne est de 7,3 kg f/cm/cm$^2$.

### Exemple 2

On prépare un copolyester de manière identique à celle décrite dans l'exemple 1 (et avec les mêmes matières premières) : à la fin du premier stade, on recueille 93,3 % d'acide acétique et à la fin du deuxième stade 99,6 %, la polycondensation étant effectuée à 1 h 15 à 294 °C sous 1,46.10$^2$ Pa.

Le copolymère ainsi obtenu possède une viscosité inhérente de 1,56 dlg$^{-1}$ et une température d'écoulement de 279 °C au-dessus de laquelle il est anisotrope. Il est moulé dans les conditions indiquées ci-dessous.

Moulage par compression à 280 °C sous une pression de 5 396.10$^4$ Pa en plaques de 125 × 50 × 3 mm dans lesquelles on découpe des barreaux de 10 mm. Sur ces barreaux, on détermine la température de déflexion sous charge selon la norme ISO 75 — méthode A : 74-76 °C.

Moulage par injection sur presse « KAP » en barreaux de 70 × 10 × 4 mm après séchage du polymère pendant 48 heures à 90 °C sous 532.10$^2$ Pa et 6 heures à 150 °C sous 1,33.10$^2$ Pa.

Caractéristiques de flexion :

| Conditions de moulage | | Résistance en flexion | Module de flexion |
|---|---|---|---|
| Température | Pression | daN/mm$^2$ | daN/mm$^2$ |
| 285-295 | 78,5.10$^4$ Pa | 13 | 305 |

### Exemple 3

On prépare un copolyester de manière identique aux deux exemples précédents et avec les mêmes réactifs de départ : à la fin du premier stade, on recueille 93,5 % d'acide acétique et à la fin de la réaction d'acidolyse 96,10 %. La polycondensation est effectuée en 1 h au total, à 290 °C sous 1,33.10$^2$ Pa.

Le copolyester obtenu possède une viscosité inhérente de 1,21 dgl$^{-1}$ et une température d'écoulement de 243 °C au-dessus de laquelle il est anisotrope. Il est moulé par injection de la manière indiquée dans l'exemple 2.

Les caractéristiques des barreaux sont les suivantes :
Résistance en flexion 10,7 daN/mm$^2$
Module de flexion 233 daN/mm$^2$

### Exemple 4

Dans un réacteur à polycondensation identique à celui utilisé dans l'exemple 1, on introduit :
— diacétate de méthylhydroquinone 417,4 parties
— acide adipique 102,2 partie
— acétate de magnésium 0,368 partie

Après purge de l'appareil à l'azote, on chauffe le mélange réactionnel avec un bain métallique à 240 °C. La distillation d'acide acétique débute à 233 °C. Au bout d'une heure, on diminue la pression à 532.10$^2$ Pa ; on maintient cette pression pendant 10 minutes et on ramène à la pression atmosphérique. Le rendement de la réaction est de 96,25 %.

On ajoute alors 215,8 parties d'acide téréphtalique et on élève la température du bain à 280 °C. Au bout de 20 minutes la distillation d'acide acétique recommence et la réaction est poursuivie pendant 2 h 10. On abaisse alors la pression à 6,65.10$^2$ Pa en 35 minutes en élevant la température du bain à 330 °C puis on effectue la polycondensation pendant 30 minutes sous une pression de 3,99.10$^2$ Pa à 325 °C.

Le polyester obtenu dans lequel la proportion molaire d'acide adipique est de 35 % par rapport à l'ensemble des diacides possède une viscosité inhérente de 2,01 dgl$^{-1}$ et une température d'écoulement de 317 °C au-dessus de laquelle il est anisotrope.

Le polymère broyé est séché pendant 48 h à 90 °C sous une pression de 532.10$^2$ Pa puis 6 heures à 150 °C sous une pression de 1,33.10$^2$ Pa puis moulé de deux façons différentes.

Moulage par compression sur presse « Carver » (température 300 °C, pression 5 396.10$^4$ Pa en barreaux de 10 mm sur lesquels on détermine la température de déflexion sous charge : 100 °C (norme ISO 75 — méthode A).

Moulage par injection sur presse « KAP » (température 330 °C, pression 78,5.10$^4$ Pa dans un moule maintenu à 40 °C, sous forme de barreaux de dimensions : 70 × 10 × 4 mm.

| Module de flexion daN/mm2 | Résistance en flexion daN/mm2 |
|---|---|
| 320 | 7,5 |

Exemple 5

On prépare de la manière indiquée dans l'exemple 3 un copolyester issu de méthylhydroquinone, d'acide adipique et d'acide téréphtalique à raison de 50 moles % de chaque diacide, de viscosité inhérente 1,27 $dlg^{-1}$ et de température d'écoulement de 250 °C au-dessus de laquelle il est anisotrope. Le polyester a été transformé par filage.

Le filage est effectué au moyen d'un rhéomètre capillaire muni d'une filière à un trou de diamètre 0,23 mm. Le débit est de 0,1 343 g/mn et la température de filage 293 °C. On obtient un fil que l'on renvide à une vitesse de 135 m/minute. Le fil obtenu, brut de filage, c'est-à-dire immédiatement après filage, sans avoir subi aucun autre traitement tel qu'étirage ou traitement thermique, possède les caractéristiques suivantes (mesurées sur brin unitaire) :

titre 11 dtex
ténacité 11,9 cN/tex
allongement 1,52 %
module de Young 872 cN/tex
angle d'orientation (2 θ = 19,5°) 19,4°.

Ce fil est ensuite traité successivement pendant 1 heure à 230 °C, 1 heure à 247 °C et 1 heure à 257 °C. Il possède alors les caractéristiques suivantes :

titre 10,1 dtex
ténacité 29,8 cN/tex
module de Young 959 cN/tex
angle d'orientation (2 θ = 19,5°) 12,2°.

La valeur de l'angle d'orientation met en évidence une orientation des filaments malgré la faible vitesse de filage et les proportions importantes des chaînes aliphatiques.

Le traitement thermique des fils à l'état essentiellement relaxé a pour effet de maintenir ou même de diminuer l'angle d'orientation c'est-à-dire d'accroître l'orientation initiale des fils.

Exemple 6

On effectue une réaction d'acidolyse dans les conditions indiquées dans les exemples précédents en utilisant les réactifs suivants :

— acétate de chlorhydroquinone 412 parties
— acide adipique 131,4 parties
— acétate de magnésium 0,346 partie

Rendement de la réaction : 100 %.

Puis on ajoute 149,4 parties d'acide téréphtalique de manière à obtenir un copolyester constitué de 50 % en moles d'acide adipique par rapport à la quantité totale de diacides. Le copolyester a une viscosité inhérente de 0,95 $dlg^{-1}$ mesurée comme indiqué ci-dessus. Sa température d'écoulement est de 248 °C au-dessus de laquelle il est anisotrope. Après séchage de la manière indiquée dans l'exemple 3, le polyester est moulé par injection et compression.

Moulage par compression sur presse « Carver »

| Température de moulage | Pression | Propriétés en flexion<br>Résistance en flexion (daN/mm2) | Module de flexion (daN/mm2) |
|---|---|---|---|
| 269 °C | $5\,396.10^4$ Pa | 4,48 | 221 |
| 260 °C | $5\,396.10^4$ Pa | 4,02 | 220 |
| 250 °C | $5\,396.10^4$ Pa | 4,51 | 239 |

Moulage par injection sur presse « KAP »

Il est effectué à 282 °C sous une pression de $39{,}2.10^4$ Pa, forme de barreaux de dimensions 70 × 10 × 4 mm.

| Résistance en flexion (daN/mm2) | Module de flexion (daN/mm2) |
|---|---|
| 10,1 | 263 |

Exemple 7

Dans un réacteur identique à celui de l'exemple 1, on introduit :

— diacétate de chlorohydroquinone 247,3 parties
— diacétate d'hydroquinone 139,7 parties
— acide adipique 131,4 parties
— acétate de magnésium 0,092 partie

On purge l'appareil à l'azote et, le bain métallique étant maintenu à 240 °C, on observe la distillation

de l'acide acétique à 221 °C. Au bout d'une heure, on abaisse la pression à $532.10^2$ Pa que l'on maintient pendant 10 minutes. Rendement de la réaction 100 %. Durée totale 1 h 25 minutes.

On introduit ensuite 149,4 parties d'acide téréphtalique et la distillation d'acide acétique reprend lorsque la température de la masse réactionnelle atteint 268°C. A la fin de cette phase d'acidolyse, on élève la température à 290 °C et on diminue la pression progressivement. La polycondensation est effectuée en 30 minutes à 292 °C sous une pression de $3,99.10^2$ Pa.

Le copolyester ainsi obtenu constitué de 40 % en mole d'hydroquinone et de 60 % de chlorohydroquinone, et de proportions molaires identiques entre elles, d'acide adipique et d'acide téréphtalique, possède une température d'écoulement de 287 °C au-dessus de laquelle il est anisotrope. Il est broyé et séché 48 heures à 90 °C sous $532.10^2$ Pa puis 6 heures sous $1,33.10^2$ Pa à 150 °C.

Moulage par injection sur presse KAP entre 280 °C et 300 °C avec un moule maintenu à une température moyenne de 40 °C sous forme de barreaux de dimensions 70 × 10 × 4 mm ayant les caractéristiques de flexion suivantes :

| Résistance en flexion DaN/mm2 | Module de flexion daN/mm2 |
|---|---|
| 8,4 | 251 |

## Exemple 8

Dans un réacteur identique à ceux des exemples précédents, on introduit :
— diacétate de méthylhydroquinone 208,7 parties
— acide glutarique 66,06 parties
— acétate de magnésium 0,127 partie

On purge à l'azote et on élève la température du bain à 245 °C. La distillation d'acide acétique débute à 220 °C et dure 2 heures avec diminution de la pression ($532.10^2$ Pa) et maintien de cette pression pendant 10 minutes à 240 °C.

On introduit alors 83 parties d'acide téréphtalique et on élève la température du bain métallique à 270 °C. La distillation reprend lorsque la masse atteint 267 °C.

La distillation d'acide acétique dure 2 h 35 ; on abaisse ensuite la pression à $1,99.10^2$ Pa en 35 minutes et on effectue la polycondensation en 30 minutes à 293 °C sous $1,99.10^2$ Pa. On obtient un copolyester de température d'écoulement 220 °C au-dessus de laquelle il est anisotrope.

Le copolyester est séché de la manière indiquée dans l'exemple 6 puis moulé par injection sur presse KAP sous forme de barreaux de dimensions 70 × 10 × 4 mm.

| Conditions de moulage | | Caractéristiques en flexion daN/mm2 | |
|---|---|---|---|
| Température du moule | Pression | Résistance | Module |
| 45 °C | $39,2.10^4$ Pa | 2,67 | 157 |

## Exemple 9

Dans un réacteur identique à celui de l'exemple 1, on introduit :
— diacétate de méthylhydroquinone 104,35 parties
— acide sébacique 50,5 parties
— acétate de magnésium 0,098 partie

La réaction d'acidolyse débute à 234 °C. Elle dure 1 h 15 mn et pendant les dix dernières minutes, elle est effectuée sous une pression réduite à $532.10^2$ Pa.

On introduit alors 41,5 parties d'acide téréphtalique et la réaction d'acidolyse reprend à 275 °C. La distillation dure 2 h 15 mn puis on diminue la pression progressivement en 30 minutes ; la polycondensation est effectuée à 288 °C en 10 minutes sous une pression de $2,66.10^2$ Pa.

Le copolyester obtenu qui comporte 50 % en mole d'acide sébacique par rapport à l'ensemble des diacides a une viscosité inhérente de 0,98 et une température d'écoulement de 179 °C au-dessus de laquelle il est anisotrope.

## Exemples 10 à 14

Dans un réacteur identique à celui de l'exemple 1, on introduit les réactifs suivants :

| Réactifs en parties | EX. 10 | EX. 11 | EX. 12 | EX. 13 | EX. 14 |
|---|---|---|---|---|---|
| diacétate de méthylhydroquinone | 24,96 | 24,96 | 24,96 | 166,4 | 166,4 |
| acide adipique | 3,5 | 5,25 | 7 | 58,4 | 58,4 |
| acétate de magnésium | 0,023 | 0,023 | 0,023 | 0,173 | 0,161 |

La distillation d'acide acétique commence à 224 °C, elle dure 1 h 15 mn en tout ; pendant les dix dernières minutes, elle est effectuée sous pression réduite de $466.10^2$ Pa.

On ajoute ensuite un acide aromatique ou cycloaliphatique comme indiqué ci-dessous :

Exemple 10 acide hexahydrotéréphtalique 16,52 parties
Exemple 11 acide hexahydrotéréphtalique 14,45 parties
Exemple 12 acide hexahydrotéréphtalique 12,38 parties
Exemple 13 dicarboxyy-4,4' diphénoxy-1,2-éthane 120,8 parties
Exemple 14 dicarboxy-4,4' diphényle 96,8 parties

La réaction d'acidolyse reprend à 250 °C et dure 2 h 15 mn. On abaisse ensuite progressivement la pression en 30 mn et on effectue la polycondensation à 290 °C en 30 mn sous $4,52.10^2$ Pa.

Les copolyesters ainsi obtenus ont les caractéristiques suivantes :

| EX. | Proportion molaire de diacide aliphatique | Viscosité inhérente $dlg^{-1}$ | Point de ramolissement | Température d'écoulement |
|---|---|---|---|---|
| 10 | 20 % | 2,89 | 298 °C | 315 °C |
| 11 | 30 % | insoluble | 288 °C | 285 °C |
| 12 | 40 % | 0,91 | 235 °C | 235 °C |
| 13 | 50 % | 0,63 | 209 °C | 280 °C |
| 14 | 50 % | 0,97 | 177 °C | 210 °C |

Ces copolyesters sont tous anisotropes au-dessus de leur température d'écoulement.

Exemple 15

Dans un réacteur identique à celui de l'exemple 1, on introduit les réactifs suivants :
— diacétate de méthylhydroquinone 93,6 parties
— acide adipique 32,85 parties
— acétate de magnésium 0,103 partie

L'acidolyse avec l'acide adipique débute à 220 °C et se termine à 234 °C pendant les 15 dernières minutes, la réaction étant effectuée sous une pression de $466.10^2$ Pa (rendement 94,44 %).

On ajoute 80,63 parties de p,p'-dicarboxy-diphénoxy-1,6 hexane et la réaction d'acidolyse reprend à 245 °C pour se terminer en 2 h 15 mn à 285 °C. On établit un vide progressif en 30 mn et la polycondensation est effectuée en 30 minutes à 285 °C sous une pression de $2,66.10^2$ Pa.

Le copolyester obtenu, comportant 50 % en mole d'acide adipique par rapport à la quantité totale de diacides, possède une viscosité inhérente de 0,54 $dlg^{-1}$ et une température d'écoulement de 225 °C au-dessus de laquelle il est anisotrope.

Exemple 16

Dans un réacteur identique à celui de l'exemple 1, on introduit les réactifs suivants :
— diacétate de méthylhydroquinone 93,6 parties
— acide adipique 32,85 parties
— acétate de magnésium 0,100 partie

La réaction d'acidolyse débute à 220 °C et se termine en 1 h 15 mn à 235 °C, les 15 dernières minutes étant effectuées sous une pression de $466.10^2$ Pa. Rendement de la réaction : 94,1 %.

On ajoute 74,32 parties de p,p'-dicarboxy-diphénoxy-1,4 butane et la réaction reprend à 241 °C et se termine à 285 °C en 2 h 15 mn. Après diminution progressive de la pression en 30 minutes, la polycondensation est effectuée en 30 minutes à 285 °C sous une pression de $2,66.10^2$ Pa.

Le copolyester ainsi obtenu a une viscosité inhérente de 1,03 $dlg^{-1}$ et une température d'écoulement de 294 °C au-dessus de laquelle il est anisotrope.

**Revendications**

1. Copolyesters thermotropes conformables de haute masse moléculaire, caractérisés par le fait qu'ils possèdent une viscosité inhérente d'au moins 0,5 (mesurée sur une solution à 0,5 g/100 $cm^3$ dans un mélange solvant p-chlorophénol/dichloro-1,2 éthane à 50/50 en volume), ayant une température d'écoulement comprise entre 150° et 330 °C, constitués d'unités de formule :

$$(—O—X_1—O—)_a, (—O—X_2—O—)_b, (—O—X_3—O—)_c$$

$$—CO—Y—CO—$$

$$—CO—Z—CO—$$

dans laquelle :

$X_1$ représente un radical paraphénylène monosubstitué par un groupe méthyle, éthyle ou un atome de chlore ou brome,

$X_2$ un radical phénylène-1,4 non substitué,

$X_3$ représente un radical paraphénylène-1,4 disubstitué par deux groupes méthyle, éthyle ou 2 atomes de chlore ou brome, ou un radical diphénylène-4,4' ou p-p'-diphénylène éther dans lequel chaque noyau aromatique peut être substitué par un groupe méthyle, éthyle ou un atome de chlore ou brome

avec $0,4 \leq a \leq 1$

$0 \leq b \leq 0,6$

$0 \leq c \leq 0,1$

et $a + b + c = 1$,

Y représente

— un radical phénylène-1,4, cyclohexylène-1,4

— ou un radical comportant deux groupes phénylène pouvant être reliés entre eux par une liaison simple ou une chaîne acyclique pouvant comporter jusqu'à 8 atomes de carbone, et éventuellement 1 ou 2 hétéroatomes

— ou un radical aromatique divalent comportant au moins deux noyaux phényles condensés dans lequel les liaisons rattachées aux groupes carbonyles sont opposées et parallèles, et

Z représente un radical $-(CH_2)_n$ avec $3 \leq n \leq 10$,

le rapport molaire Z/Y + Z étant compris entre 20 et 50 %.

2. Copolyesters selon la revendication 1, caractérisés par le fait que le radical Y est choisi parmi les radicaux phénylène-1,4, cyclohexylène-1,4, diphénylène-4,4', naphtylène-2,6, p-p'-diphénoxy-1,2 éthane, p-p'-diphénoxy-1,4 butane, p-p'-diphénoxy-1,6 hexane.

3. Copolyesters selon la revendication 1, caractérisés par le fait que le radical Z est choisi parmi les radicaux tri-, tétra- ou octaméthylène.

4. Copolyesters selon la revendication 1, caractérisés par le fait que le radical $X_1$ est choisi parmi les radicaux méthyl-phénylène-1,4 ou chlorophénylène-1,4.

5. Articles tels que fils, films et objets moulés conformés au moyen des copolyesters selon la revendication 1.

6. Articles conformés tels que fils, films et objets moulés selon la revendication 5, ayant subi un traitement thermique à l'état relaxé après leur mise en forme.

**Claims**

1. High molecular weight thermotropic copolyesters which can be shaped, characterised in that they possess an inherent viscosity of at least 0.5 (measured on a solution containing 0.5 g/100 $cm^3$ in a 50/50 by volume solvent mixture of p-chlorophenol and 1,2-dichloroethane), have a flow point of between 150° and 330 °C and consist of units of the formula :

$$(-O-X_1-O-)_a,\ (-O-X_2-O-)_b,\ (-O-X_3-O-)_c,$$

$$-CO-Y-CO-$$

$$-CO-Z-CO-,$$

in which :

$X_1$ represents a para-phenylene radical monosubstituted by a methyl or ethyl group or a chlorine or bromine atom,

$X_2$ represents an unsubstituted 1,4-phenylene radical and

$X_3$ represents a para-phenylene radical disubstituted by two methyl or ethyl groups or 2 chlorine or bromine atoms, or a 4,4'-biphenylene or p,p'-diphenylene ether radical in which each aromatic nucleus can be substituted by a methyl or ethyl group or a chlorine or bromine atom,

with $0.4 \leq a \leq 1$

$0 \leq b \leq 0.6$

$0 \leq c \leq 0.1$

and $a + b + c = 1$,

Y represents

— a 1,4-phenylene or 1,4-cyclohexylene radical,

— a radical containing two 1,4-phenylene groups which can be joined to one another by a single bond or an acyclic chain which can contain up to 8 carbon atoms and, if appropriate, 1 or 2 hetero-atoms,

— or a divalent aromatic radical containing at least two fused phenyl nuclei, in which the bonds attached to the carbonyl groups are opposite and parallel, and

Z represents a radical $-(CH_2)_n$, with $3 \leq n \leq 10$,

the molar ratio Z/Y + Z being between 20 and 50 %.

2. Copolyesters according to Claim 1, characterised in that the radical Y is chosen from amongst 1,4-phenylene, 1,4-cyclohexylene, 4,4'-biphenylene, 2,6-naphthylene, 1,2-(p,p'-diphenoxy)-ethane, 1,4-(p,p'-diphenoxy)-butane and 1,6-(p,p'-diphenoxy)-hexane radicals.

3. Copolyesters according to Claim 1, characterised in that the radical Z is chosen from amongst tri-, tetra- or octa-methylene radicals.

4. Copolyesters according to Claim 1, characterised in that the radical $X_1$ is chosen from amongst methyl-1,4-phenylene or chloro-1,4-phenylene radicals.

5. Articles such as filaments, films and moulded articles, shaped by means of the copolyesters according to Claim 1.

6. Shaped articles such as filaments, films and moulded articles, according to Claim 5, which have been subjected to a heat treatment in the relaxed state, after they have been shaped.

## Ansprüche

1. Verformbare thermotrope Copolyester mit hoher Molekularmasse, dadurch gekennzeichnet, daß sie eine inhärente Viskosität von mindestens 0,5 besitzen (gemessen an einer Lösung zu 0,5 g/100 $cm^3$ in einem Lösungsmittelgemisch p-Chlorphenol/1,2-Dichloräthan zu 50/50 in Vol.) mit einer Fließtemperatur zwischen 150 und 330 °C bestehend aus Einheiten der Formel

$$(-O-X_1-O-)_a,\ (-O-X_2-O-)_b,\ (-O-X_3-O-)_c,$$

$$-CO-Y-CO-$$

$$-CO-Z-CO-$$

worin :

$X_1$ einen p-Phenylenrest, monosubstituiert durch eine Methyl-, Äthylgruppe oder ein Chlor- oder Bromatom bedeutet,

$X_2$ einen nicht-substituierten 1,4-Phenylenrest bedeutet,

$X_3$ einen 1,4-p-Phenylenrest bedeutet, disubstituiert durch zwei Methyl-, Äthylgruppen oder zwei Chlor- oder Bromatome, oder einen 4,4'-Diphenylenrest oder p-p'-Diphenylenätherrest, worin jeder aromatische Ring durch eine Methyl-, Äthylgruppe oder ein Chlor- oder Bromatom substituiert sein kann,

mit $0,4 \leq a \leq 1$

$0 \leq b \leq 0,6$

$0 \leq c \leq 0,1$

und $a + b + c = 1$,

Y bedeutet

— einen 1,4-Phenylenrest, 1,4-Cyclohexylenrest

— oder einen Rest mit zwei 1,4-Phenylengruppen, welche untereinander durch eine Einfachbindung oder eine acyclische Kette verbunden sind, welche bis zu 8 Kohlenstoffatome tragen kann und gegebenenfalls 1 oder 2 Heteroatome,

— oder einen zweiwertigen aromatischen Rest, umfassend wenigstens zwei kondensierte Phenylkerne, worin die mit den Carbonylgruppen verbundenen Bindungen entgegengesetzt und parallel sind und

Z bedeutet einen Rest $-(CH_2)_n$ mit $3 \leq n \leq 10$,

wobei das Molverhältnis Z/Y + Z zwischen 20 und 50 % liegt.

2. Copolyester gemäß Anspruch 1, dadurch gekennzeichnet, daß der Rest Y ausgewählt ist unter den Resten 1,4-Phenylen, 1,4-Cyclohexylen, 4,4'-Diphenylen, 2,6-Naphthylen-, 1,2-p-p'-Diphenoxy-äthan, 1,4-p-p'-Diphenoxy-Butan, 1,6-p-p'-Diphenoxy-hexan.

3. Copolyester gemäß Anspruch 1, dadurch gekennzeichnet, daß der Rest Z ausgewählt ist unter den Tri- Tetra- oder Octamethylenresten.

4. Copolyester gemäß Anspruch 1, dadurch gekennzeichnet, daß der Rest $X_1$ ausgewählt ist unter den 1,4-Methylphenylen- oder 1,4-Chlorphenylenresten.

5. Erzeugnisse wie Fäden, Filme oder geformte Gegenstände verformt mittels der Copolyester gemäß Anspruch 1.

6. Verformte Artikel wie Fäden, Filme oder geformte Gegenstände gemäß Anspruch 5, welche einer thermischen Behandlung in entspannten Zustand nach ihrer Formgebung unterworfen wurden.